# EUROPEAN PATENT APPLICATION

(11) **EP 4 529 069 A1**
(43) Date of publication of application: **26.03.2025**
(21) Application number: 23856452.0
(22) Date of filing: 07.08.2023
(51) Int. Cl.: H04L 5/00, H04W 24/10, H04W 72/04

(54) **CHANNEL STATE INFORMATION PROCESSING METHOD AND APPARATUS, COMMUNICATION NODE AND STORAGE MEDIUM**

(30) Priority: 26.08.2022 CN 202211033034
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); ZHENG, Guozeng, Shenzhen, Guangdong 518057 (CN); LI, Yong, Shenzhen, Guangdong 518057 (CN); ZHANG, Jiayi, Shenzhen, Guangdong 518057 (CN)
(74) Representative: Aipex B.V.
(86) International application number: PCT/CN2023/111509
(87) International publication number: WO 2024/041362

(57) **Abstract**

Provided are a channel state information processing method and apparatus, a communication node, and a storage medium. The CSI processing method includes receiving a first reference signal measurement resource and a second reference signal measurement resource; acquiring first CSI according to the first reference signal measurement resource and acquiring second CSI according to the second reference signal measurement resource; and feeding back the first CSI and the second CSI.

## Description

### TECHNICAL FIELD

The present application relates to the field of communication technology, for example, a channel state information (CSI) processing method and apparatus, a communication node, and a storage medium.

### BACKGROUND

Multi-antenna technology can improve the performance of wireless communication systems. Therefore, multi-antenna technology is widely used in various wireless communication systems. To obtain the performance of multi-antenna technology, the network side needs to acquire relatively accurate CSI. In the related art, artificial intelligence (AI) may be used to feed back CSI effectively. However, as the environment changes, for example, the terminal moves from indoors to outdoors or from an Urban Microcell (UMi) to an Urban Macrocell (UMa), the AI network parameters trained in one environmental scenario may no longer be suitable for the new environment, resulting in the degradation of CSI feedback performance.

### SUMMARY

Embodiments of the present application provide a channel state information processing method and apparatus, a communication node, and a storage medium.

In a first aspect, an embodiment of the present application provides a CSI processing method. The method is applied to a first communication node and includes the following.

A first reference signal measurement resource and a second reference signal measurement resource are received; first CSI is acquired according to the first reference signal measurement resource and second CSI is acquired according to the second reference signal measurement resource; and the first CSI and the second CSI are fed back.

In a second aspect, an embodiment of the present application provides a CSI processing method. The method is applied to a second communication node and includes the following.

A first reference signal measurement resource and a second reference signal measurement resource are sent, where the first reference signal measurement resource is used for acquiring first CSI, and the second reference signal measurement resource is used for acquiring second CSI; and the first CSI and the second CSI are received.

In a third aspect, an embodiment of the present application provides a CSI processing apparatus. The apparatus is integrated into a first communication node and includes a receiving module, an acquisition module, and a feedback module.

The receiving module is configured to receive a first reference signal measurement resource and a second reference signal measurement resource. The acquisition module is configured to acquire first CSI according to the first reference signal measurement resource and acquire second CSI according to the second reference signal measurement resource. The feedback module is configured to feed back the first CSI and the second CSI.

In a fourth aspect, an embodiment of the present application provides a CSI processing apparatus. The apparatus is integrated into a second communication node and includes a sending module and a receiving module.

The sending module is configured to send a first reference signal measurement resource and a second reference signal measurement resource, where the first reference signal measurement resource is used for acquiring first CSI, and the second reference signal measurement resource is used for acquiring second CSI. The receiving module is configured to receive the first CSI and the second CSI.

In a fifth aspect, an embodiment of the present application provides a communication node. The communication node includes a memory and a processor. The processor executes the computer program to perform the CSI processing method provided in the first aspect and the second aspect of the embodiments of the present application.

In a sixth aspect, an embodiment of the present application provides a storage medium. The storage medium is configured to store a computer program which, when executed by a processor, causes the processor to perform the CSI processing method provided in the first aspect and the second aspect of the embodiments of the present application.

### BRIEF DESCRIPTION OF DRAWINGS

FIG. 1 is a diagram illustrating the structure of a wireless communication system according to an embodiment of the present application.
FIG. 2 is a schematic diagram of a CSI processing process according to an embodiment of the present application.
FIG. 3 is a flowchart of a CSI processing method according to an embodiment of the present application.
FIG. 4 is a schematic diagram of a CSI feedback manner according to an embodiment of the present application.
FIG. 5 is a schematic diagram of another CSI feedback manner according to an embodiment of the present application.
FIG. 6 is a schematic diagram of another CSI feedback manner according to an embodiment of the present application.
FIG. 7 is a flowchart of another CSI processing method according to an embodiment of the present application.
FIG. 8 is a flowchart of another CSI processing method according to an embodiment of the present application.
FIG. 9 is a flowchart of another CSI processing method according to an embodiment of the present application.
FIG. 10 is a diagram illustrating the structure of a CSI processing apparatus according to an embodiment of the present application.
FIG. 11 is a diagram illustrating the structure of another CSI processing apparatus according to an embodiment of the present application.
FIG. 12 is a diagram illustrating the structure of a communication node according to an embodiment of the present application.

### DETAILED DESCRIPTION

The embodiments described herein are intended to explain the present application. Embodiments of the present application are described hereinafter in conjunction with drawings.

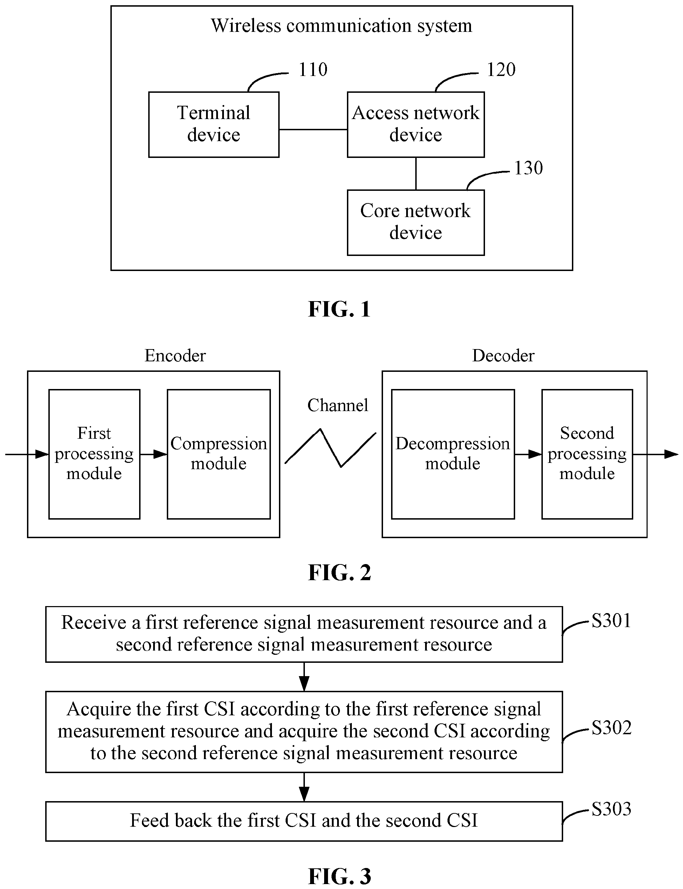

The CSI processing method of the embodiments of the present application may be applied to various wireless communication systems, for example, a long-term evolution (LTE) system, a 4th-generation (4G) system, a 5th-generation (5G) system, an LTE-5G hybrid architecture system, a 5G New Radio (NR) system, and a new communication system such as a 6th-generation (6G) system in future communications. FIG. 1 is a networking diagram of a wireless communication system according to an embodiment. As shown in FIG. 1, the wireless communication system includes a terminal device 110, an access network device 120, and a core network device 130.

The terminal device 110 may be a wireless transceiving device that may be deployed on land (for example, indoor or outdoor, handheld, worn, or in-vehicle), deployed on the water surface (such as a ship), or deployed in the air (for example, aircraft, balloon, or satellite). The terminal device 110 may be, for example, a user equipment (UE), a mobile phone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, an industrial control terminal, a wireless terminal in self-driving, a wireless terminal in remote medicine, a wireless terminal in a smart grid, a wireless terminal in transportation safety, a wireless terminal in a smart city, a wireless terminal in a smart home, an IoT node in the Internet of Things, a vehicle-mounted communication apparatus in vehicle-to-everything, an entertainment or gaming device or system, or a global positioning system (GPS) device. Embodiments of the present application do not limit forms used by the terminal device 110. The terminal device 110 may be referred to as a terminal.

The access network device 120 is an access device through which the terminal device 110 accesses the wireless communication system in a wireless manner. The access network device 120 may be, for example, a base station, an evolved NodeB (eNB or eNodeB) in long-term evolution advanced (LTEA), a transmission reception point (TRP), a base station or next-generation NodeB (gNB) in a 5G mobile communication system, a base station in a future mobile communication system, or an access node in a Wireless Fidelity (Wi-Fi) system. The base station may be, for example, a macro base station, a micro base station, a home base station, a wireless remote station, a router, a Wi-Fi device, a primary-cell device, a secondary-cell device, another network device, or a location management function (LMF) device. The access network device 110 may also be a module or unit for implementing some functions of the base station, for example, a central unit (CU) or a distributed unit (DU). Embodiments of the present application do not limit technologies and forms used by the access network device. The access network device may be referred to as a base station.

The core network device 130 may be, for example, an access and mobility management network element or a session management network element. For example, the terminal device 110 may access the core network through the access network device 120 to perform data transmission.

To facilitate a better understanding by those skilled in the art, the relevant concepts involved in the communication system are described below first.

To calculate CSI or perform channel estimation, mobility management, positioning, and the like, the base station or terminal needs to send a reference signal (RS). The RS includes, but is not limited to, a channel state information reference signal (CSI-RS), a channel state information - interference measurement (CSI-IM) signal, a sounding reference signal (SRS), a synchronization signal block (SSB), a physical broadcast channel (PBCH), and a synchronization signal block/physical broadcast channel (SSB/PBCH). The CSI-RS includes a zero power CSI-RS (ZP CSI-RS) and a non-zero power CSI-RS (NZP CSI-RS). The NZP CSI-RS may be used for measuring the channel or interference. The CSI-RS may be used for tracking, so the CSI-RS may be referred to as a CSI-RS for Tracking (TRS). The CSI-IM is generally used for measuring the interference. The SRS is used for performing channel estimation or acquiring uplink precoding. In addition, a set of resource elements (REs) for transmitting RSs is referred to as a reference signal resource, for example, a CSI-RS resource, an SRS resource, a CSI-IM resource, and an SSB resource. In the embodiment of the present application, the SSB may include an SSB and/or a PBCH.

In the embodiment of the present application, resources for transmitting RSs may be referred to as reference signal resources. To reduce signaling overhead and for other reasons, multiple reference signal resources may be combined into one set (such as a CSI-RS resource set, a CSI-IM resource set, and an SRS resource set). One reference signal resource set includes at least one reference signal resource. Multiple reference signal resource sets may all be derived from the same reference signal resource setting (such as CSI-RS resource setting, SRS resource setting, or CSI-IM resource setting, where CSI-RS resource setting and CSI-IM resource setting may be combined and are collectively referred to as CSI-RS resource setting), and parameter information of the RSs is configured through reference signal resource setting.

In the embodiment of the present application, a second communication node configures reference signal measurement resource configuration information, and the reference signal measurement resource configuration information includes indication information of the reference signal measurement resource, such as time domain characteristics corresponding to the reference signal measurement resource. The time domain characteristics include, but are not limited to, an aperiodic characteristic, a periodic characteristic, and a semi-persistent characteristic, indicating that the transmitted RSs are aperiodic, periodic, or semi-persistent, respectively. Through higher-layer signaling, the period and/or slot offset information are configured for the periodic RS or the semi-persistent RS. These two parameters may be jointly encoded (for example, configured through higher-layer signaling periodicity and Offset). By acquiring the parameters, the user may know the transmission period and transmission slot of the periodic RS or semi-persistent RS, the time-frequency position, the included types of reference signal measurement resources (such as the CRI-RS, SRS, and SSB), the reference signal set definition, the configuration definition, and the like. The reference signal measurement resource is used for acquiring the CSI. The reference signal measurement resource includes C_{N} channel measurement resources (CMRs) and C_{M} interference measurement resources (IMRs), where C_{N} and C_{M} are positive integers. Of course, one of C_{N} and C_{M} may be equal to zero, that is, the reference signal measurement resource includes only the CMRs or the IMRs. The second communication node configures the reference signal measurement resource in a report configuration (report config) or a reporting setting. In an example, C_{N} CMRs are used by the terminal to perform channel measurement. In another example, C_{M} IMRs are used by the terminal to measure the interference. In the embodiment of the present application, transmission includes sending or receiving. For example, transmission includes sending data or signals or receiving data or signals.

In the embodiment of the present application, the indicators of various parameters may also be referred to as indexes or identifiers (IDs), which are completely equivalent concepts. For example, wireless system resource IDs may include, but are not limited to, at least one of the following: indexes corresponding to a reference signal resource, a reference signal resource group, a reference signal resource configuration, a CSI report, a CSI report set, a terminal, a base station, a panel, a neural network, a sub-neural network, a neural network layer, and the like. The second communication node may indicate the ID of one resource or the IDs of a group of resources to the first communication node through various types of higher-layer signaling or physical-layer signaling.

To better transmit data or signals, the base station needs to acquire the CSI. As shown in FIG. 2, a CSI acquisition manner is provided. For example, a pre-trained AI network is used to acquire and feed back the CSI. The AI network may include an encoder and a decoder. The encoder is located on the terminal, the decoder is located on the base station, the encoder may include a first processing module and a compression module, and the decoder may include a decompression module and a second processing module. The terminal compresses the obtained channel information H through the encoder to obtain the CSI H1 and feeds back the obtained CSI H1 to the base station. The base station receives H1 and decompresses H1 through the decompression module of the decoder to restore the channel information H. However, as the environment in which the terminal is located changes, the AI network may no longer be suitable for the new environment, resulting in the degradation of CSI feedback performance. Therefore, how to determine whether the AI network is suitable for the current channel environment is a technical problem that needs to be solved urgently by those skilled in the art.

FIG. 3 is a flowchart of a CSI processing method according to an embodiment of the present application. The method is applied to the first communication node. In this embodiment, the first communication node may be the terminal, and the second communication node may be the base station. As shown in FIG. 3, the method may include S301, S302, and S303.

In S301, a first reference signal measurement resource and a second reference signal measurement resource are received.

The reference signal measurement resource may include channel reference signal measurement resource and interference reference signal measurement resource. In an example, the channel reference signal measurement resource may be at least one NZP CSI-RS resource, and the interference reference signal measurement resource may be at least one CSI-IM resource and/or at least one NZP CSI-RS for measuring the interference. In an example, the channel reference signal measurement resource may be at least one NZP CSI-RS resource set, and the interference reference signal measurement resource may be at least one CSI-IM resource set and/or at least one NZP CSI-RS set for measuring interference. In an example, the channel reference signal measurement resource may be at least one SRS resource or at least one SRS resource set. In an example, the channel reference signal measurement resource may be at least one SSB resource or at least one SSB resource set.

In an embodiment, one reference signal measurement resource may include at least one channel reference signal measurement resource or at least one channel reference signal measurement resource set. In an embodiment, one reference signal measurement resource may include at least one interference reference signal measurement resource or at least one interference reference signal measurement resource set. In an embodiment, one reference signal measurement resource includes at least one channel reference signal measurement resource and at least one interference reference signal measurement resource. In an embodiment, one reference signal measurement resource includes at least one channel reference signal measurement resource set and at least one interference reference signal measurement resource set.

In an embodiment, the first reference signal measurement resource and the second reference signal measurement resource include at least one same reference signal measurement resource.

For example, the first reference signal measurement resource and the second reference signal measurement resource are the same. In an example, the first reference signal measurement resource includes K1 reference signal measurement resources, and the second reference signal measurement resource includes K2 reference signal measurement resources. Among the K1 reference signal measurement resources and the K2 reference signal measurement resources, K0 reference signal measurement resources are the same. K1, K2, and K0 are positive integers, and K0 is not greater than K1 and K2. In an example, K0 = 1. In an example, K1 = K2 = K0.

In an embodiment, an IMR in the first reference signal measurement resource is the same as an IMR in the second reference signal measurement resource.

In an embodiment, a CMR in the first reference signal measurement resource is the same as a CMR in the second reference signal measurement resource. Here, the IMR is used for acquiring interference information, and the CMR is used for acquiring channel information.

In an embodiment, the second communication node may send configuration information related to the first reference signal measurement resource and the second reference signal measurement resource to the first communication node through higher-layer signaling or physical-layer signaling. The first communication node receives the first reference signal measurement resource configuration information and the second reference signal measurement resource configuration information, receives the first reference signal measurement resource in one or more slots according to the first reference signal measurement resource configuration information, and receives the second reference signal measurement resource in one or more slots according to the second reference signal measurement resource configuration information. The configuration information related to the preceding reference signal measurement resources may include resource mapping, time domain characteristics (for example, periodic reference signals, semi-persistent reference signals, and aperiodic reference signals), resource IDs, quasi-co-location information, periods, offsets, and the like corresponding to the first reference signal measurement resource and the second reference signal measurement resource. In an example, if the first reference signal measurement resource and the second reference signal measurement resource are the same, the "first" and "second" are not distinguished, and the first reference signal measurement resource and the second reference signal measurement resource may be referred to as reference signal measurement resources. That is to say, the reference signal measurement resources may be indicated by transmitting one piece of reference signal measurement resource configuration information, and the first CSI and the second CSI may be acquired according to the reference signal measurement resources. For example, in an example, the first communication node receives the reference signal measurement resources, acquires the first CSI according to the reference signal measurement resource, acquires the second CSI according to the reference signal measurement resource, and feeds back the first CSI and the second CSI. In an example, the second communication node sends the reference signal measurement resources, the reference signal measurement resource is used for acquiring the first CSI, the reference signal measurement resource is used for acquiring the second CSI, and the second communication node receives the first CSI and the second CSI.

The preceding higher-level signaling includes, but is not limited to, the Radio Resource Control (RRC) and the media access control control element (MAC CE). The physical-layer signaling may be transmitted between the first communication node and the second communication node. For example, the physical-layer signaling is transmitted on the PDCCH.

In S302, the first CSI is acquired according to the first reference signal measurement resource and the second CSI is acquired according to the second reference signal measurement resource.

The CSI may include at least one of the following: a CSI-RS resource indicator (CRI), a synchronization signal block resource indicator (SSBRI), Reference Signal Received Power (RSRP), differential RSRP, a channel quality indicator (CQI), a precoding matrix indicator (PMI), a Layer Indicator (LI), a Rank Indicator (RI), a Level 1 signal-to-interference-plus-noise ratio (L1-SINR), a differential L1-SINR, precoding information, or the like. Here, the PMI is a type of precoding information, that is, the case where the precoding information is implemented based on a codebook, for example, the first type of precoding information. The precoding information further includes the case where the precoding information is implemented in a non-codebook manner, for example, the second type of precoding information. In an example, the CSI including the first type of precoding information is referred to as the first type of CSI. In an example, the CSI including the second type of precoding information is referred to as the second type of CSI.

In an embodiment, the first communication node and the second communication node may transmit the CSI matching the channel through the first type of precoding information, where the first type of precoding information is formed based on quantized values of the traditional channel feature matrix or feature matrix. For example, in a codebook-based method, the codebook is the N-antenna codebook in LTE, where N = 2, 4, 8, 12, 16, or 2432, or the Type I codebook, Type II codebook, Type II port selection codebook, enhanced Type II codebook, enhanced Type II selection codebook, or Further enhanced Type II selection codebook in NR. The codebook here includes L code words, and its main idea is that the first communication node and the second communication node save L code words in advance according to a prescribed formula, table, or dictionary. In an example, the code word is a vector. In an example, the code word is a matrix, the matrix includes r columns, and each column is a vector. Different columns of the matrix are orthogonal to each other. In an example, the vector forming the code word is a 0-1 vector, where only one value of the entire vector is equal to 1, and the other values are equal to 0. In an example, the vector forming the code word is a discrete Fourier transform (DFT) vector. In an example, the vector forming the code word is a Kronecker product of two or more DFT vectors. In an example, the vector forming the code word is obtained by connecting two or more DFT vectors multiplied by different phase rotations. In an example, the vector forming the code word is a Kronecker product of two or more DFT vectors multiplied by the phase rotation. The first communication node or the second communication node searches L code words for the code word that best matches the channel and uses this code word as the optimal code word for transmitting data or signals. Here, the code word matching the channel includes, but is not limited to, at least one of the following: the distance between the code word and the channel being the smallest, the correlation between the code word and the channel being the largest, the distance between the code word and the optimal right singular vector or matrix of the channel being the smallest, the correlation between the code word and the optimal right singular vector or matrix of the channel being the largest, the calculated signal-to-noise ratio of the code word and the channel being the largest, or the like. L is an integer greater than 1 and is generally greater than the number of transmit antennas.

In an embodiment, the first communication node and the second communication node may transmit the CSI matching the channel through the second type of precoding information, where the second type of precoding information is the CSI obtained based on AI. In an example, the first communication node and the second communication node obtain the CSI through an encoder of an autoencoder, where the autoencoder includes an encoder and a decoder. The encoder is deployed on the first communication node (such as the terminal), and the decoder is deployed on the second communication node (such as the base station). The first communication node compresses the obtained channel H through the encoder to obtain the compressed channel H1, quantizes the compressed channel H1, and feeds back the quantized channel H1 to the second communication node. The second communication node receives the quantized channel H1, dequantizes the quantized channel H1, and inputs the channel H1 into the decoder. The decoder decompresses the channel H1 to restore the channel H. In an example, the channel H includes K0 elements, the first communication node selects K elements from the channel H as the channel H1, quantizes the channel H1, and feeds back the quantized channel H1, the base station receives and dequantizes the K quantized elements and inputs the dequantized K elements into an AI module, and the AI module outputs K0 elements to restore the channel H, thereby obtaining the precoding matrix of the channel H. K and K0 are integers greater than 1, and K is less than K0. Here, the channel H1 compressed by the compressor or the K elements selected from the channel H may be referred to as the second type of precoding information. In addition, for the sake of simplicity, the quantized channel H1 may be referred to as the second type of precoding information. In an example, the second type of precoding information may be a precoding matrix that is different from the first type of precoding information and is generated in other non-AI manners. In an example, the second type of precoding information may be a precoding matrix other than the first type of precoding information.

The first CSI may be the first type of precoding information, and the second CSI may be the second type of precoding information.

In an embodiment, the first communication node may determine the first CSI according to a first acquisition manner and the first reference signal measurement resource and determine the second CSI according to a second acquisition manner and the second reference signal measurement resource.

When the first reference signal measurement resource and the second reference signal measurement resource include CMRs, the first communication node may acquire corresponding first channel information based on the first reference signal measurement resource, acquire corresponding second channel information based on the second reference signal measurement resource, quantize the first channel information based on the first acquisition manner to obtain the first CSI, and quantize the second channel information based on the second acquisition manner to obtain the second CSI.

When the first reference signal measurement resource and the second reference signal measurement resource include CMRs and IMRs, the first communication node may acquire corresponding first channel information and first interference information based on the first reference signal measurement resource, acquire corresponding second channel information and second interference information based on the second reference signal measurement resource, quantize the first channel information and the first interference information based on the first acquisition manner to obtain the first CSI, and quantize the second channel information and the second interference information based on the second acquisition manner to obtain the second CSI.

The first and the second in the first acquisition manner and the second acquisition manner are used only for distinguishing between the CSI acquisition manners. For example, the first acquisition manner may be a CSI acquisition manner based on the codebook. The second acquisition manner may be a CSI acquisition manner based on the AI network.

In S303, the first CSI and the second CSI are fed back.

After the first CSI and the second CSI are obtained, the first communication node feeds back the first CSI and the second CSI to the second communication node so that the second communication node adjusts the CSI acquisition manner based on the first CSI and the second CSI. In an example, if the first CSI is better than the second CSI or the correlation between the first CSI and the second CSI is less than a preset threshold value, the CSI acquisition manner is adjusted to: acquiring and feeding back the CSI based on a first acquisition manner, for example, acquiring the CSI based on a codebook manner; and the CSI acquisition manner may also be adjusted to: instructing the first communication node to acquire the CSI in a newly determined manner in which the CSI is acquired based on reference signal measurement resources, for example, using an AI network adapted to the new environment. In an example, if the second CSI is better than the first CSI or the correlation between the second CSI and the first CSI is greater than the preset threshold value, it indicates that the current CSI acquisition manner is still adapted to the new environment, so the CSI can be acquired in the original manner, for example, using the original AI network.

In this embodiment, the first communication node acquires the first CSI based on the first reference signal measurement resource, acquires the second CSI based on the second reference signal measurement resource, and feeds back the first CSI and the second CSI. Through the first CSI and the second CSI, it can be known whether the AI network currently used is adapted to the current channel environment so that the CSI acquisition manner can be adjusted in time, or more accurate CSI can be acquired from the first CSI and the second CSI, thereby improving the accuracy of the CSI.

To transmit the CSI, the first communication node and the second communication node need to define a CSI report (CSI report or CSI report congfig), where the CSI report defines at least one of the following parameters: time-frequency resources for feeding back the CSI, reportQuantity included in the CSI, time domain types (reportConfigType) of the CSI feedback, CMRs, IMRs, or measurement bandwidth sizes. The CSI report may be transmitted on the uplink transmission resources. The uplink transmission resources may include the Physical Uplink Shared Channel (PUSCH) and the Physical Uplink Control Channel (PUCCH). At the same time, the CSI report further includes time domain characteristics. The time domain characteristics include a periodic CSI report (P-CSI), an aperiodic CSI report (AP-CSI), and a semi-persistent CSI report (SP-CSI). Generally speaking, the number of bits transmitted by the P-CSI is smaller and the P-CSI may be transmitted on the PUCCH; the number of bits transmitted by the AP-CSI is larger and the AP-CSI is generally transmitted on the PUSCH; the SP-CSI may be transmitted based on the PUSCH or PUCCH. The P-CSI transmitted based on the PUCCH is generally configured by higher-level signaling (such as the RRC), the SP-CSI transmitted based on the PUCCH is also configured or activated by higher-level signaling (the RRC and/or MAC CE), the SP-CSI or AP-CSI transmitted based on the PUSCH is triggered by physical-layer signaling (Downlink Control Information (DCI)), and the DCI is generally transmitted on the Physical Downlink Control Channel (PDCCH). That is, the preceding CSI and the slot corresponding to the CSI may be transmitted on the uplink transmission resources. In an example, the CSI may be carried and transmitted on at least one aperiodic PUSCH. In an example, the CSI may be carried and transmitted on at least one semi-persistent PUSCH. In an example, the CSI may be carried and transmitted on at least one periodic PUCCH.

In an embodiment, the second communication node configures M CSI reports for the first communication node through higher-layer signaling and/or physical-layer signaling, where the M CSI reports need to be fed back. Each CSI report has an index value (identity (ID)), referred to as a CSI reportID. The first communication node may select M_{C} CSI reports from the M CSI reports according to the computing power or processing power of the first communication node and the requirements of the second communication node. The first communication node feeds back at least one CSI report among the M_{C} CSI reports according to the uplink feedback resources, where M and M_{C} are positive integers and M_{C} ≤ M. In an example, M_{C} CSI reports need to be fed back, but the feedback resources of at least two of the M_{C} reports conflict. The conflict of feedback resources of the two reports means that at least one symbol in the corresponding transmission resource (such as the PUCCH or PUSCH) for feeding back the two reports is the same and/or at least one subcarrier in the corresponding transmission resource (such as the PUCCH or PUSCH) for feeding back the two reports is the same. In an example, the first communication node needs to feed back multiple CSI reports, where transmission resources corresponding to at least L CSI reports among the multiple CSI reports conflict. In an example, at least one of the conflicting L CSI reports includes a report of the second type of precoding information, where L is a positive integer. Based on this, the priority values (PVs) of the L conflicting CSI reports may be calculated according to a priority calculation formula, the PVs are sorted from small to large, and at least one CSI report with a small PV is selected and transmitted on the uplink transmission resources.

In an example, feeding back the CSI through one CSI report refers to carrying and transmitting the CSI corresponding to the CSI report on the transmission resource indicated by the CSI report. In the embodiment of the present application, feeding back the CSI may also be referred to as transmitting the CSI or sending the CSI, for example, carrying the CSI on the uplink transmission resource for feedback or transmission. The uplink transmission resource and the corresponding CSI are both indicated by one CSI report. In the embodiment of the present application, feeding back one CSI report refers to feeding back the CSI corresponding to the CSI report.

In an embodiment, through higher-layer signaling and/or physical-layer signaling, the second communication node configures the first communication node such that the first communication node feeds back the first CSI and the second CSI through the same CSI report. In this manner, after obtaining the first CSI and the second CSI, the first communication node can feed back the first CSI and the second CSI through the same CSI report. That is to say, the same CSI report includes both the first CSI and the second CSI so that the first communication node can simultaneously feed back the first CSI and the second CSI by sending one CSI report.

In an embodiment, through higher-layer signaling and/or physical-layer signaling, the second communication node configures the first communication node such that the first communication node feeds back the first CSI through the first CSI report and feeds back the second CSI through the second CSI report. In this manner, after obtaining the first CSI and the second CSI, the first communication node can feed back the first CSI through the first CSI report and feed back the second CSI through the second CSI report.

The first CSI report and the second CSI report correspond to the same transmission resource, that is, by feeding back the first CSI report and the second CSI report through the same time-frequency resource, the second communication node obtains the first CSI and the second CSI.

In an embodiment, the priority of the first CSI is higher than the priority of the second CSI. For example, when the first CSI report and the second CSI report correspond to the same transmission resource, if the first CSI and the second CSI cannot be transmitted simultaneously through the transmission resource, only the first CSI may be transmitted and the second CSI may be ignored.

Since the first CSI may be acquired based on the codebook and the second CSI may be acquired based on the AI network, the accuracy of the first CSI is relatively stable. In the case where the transmission resources are limited, the first CSI is transmitted preferentially so that the second communication node can acquire the CSI with higher accuracy, thereby improving the accuracy of the CSI.

The first CSI report and the second CSI report correspond to different transmission resources. The different transmission resources may be different time-frequency resources corresponding to the different or same slots or may be the same time-frequency resources corresponding to different slots. Here, the time-frequency resource includes a resource element (RE) set of at least one subcarrier and at least one symbol. For example, the time-frequency resource includes at least one physical resource block or one sub-band. In some examples, the symbol refers to a time unit in a subframe, frame, or slot. For example, the symbol may be an orthogonal frequency-division multiplexing (OFDM) symbol, a single-carrier frequency-division multiple access (SC-FDMA) symbol, or an orthogonal frequency-division multiple access (OFDMA) symbol.

In an embodiment, when the first CSI report and the second CSI report correspond to different transmission resources, the first communication node may feed back the first CSI and the second CSI based on the type of the CSI report.

The type of the CSI report configured by the second communication node may be a periodic report, a semi-persistent report, or an aperiodic report. When the CSI report is the periodic report, the first communication node alternately transmits the first CSI in T1 transmission periods and transmits the second CSI in T2 transmission periods.

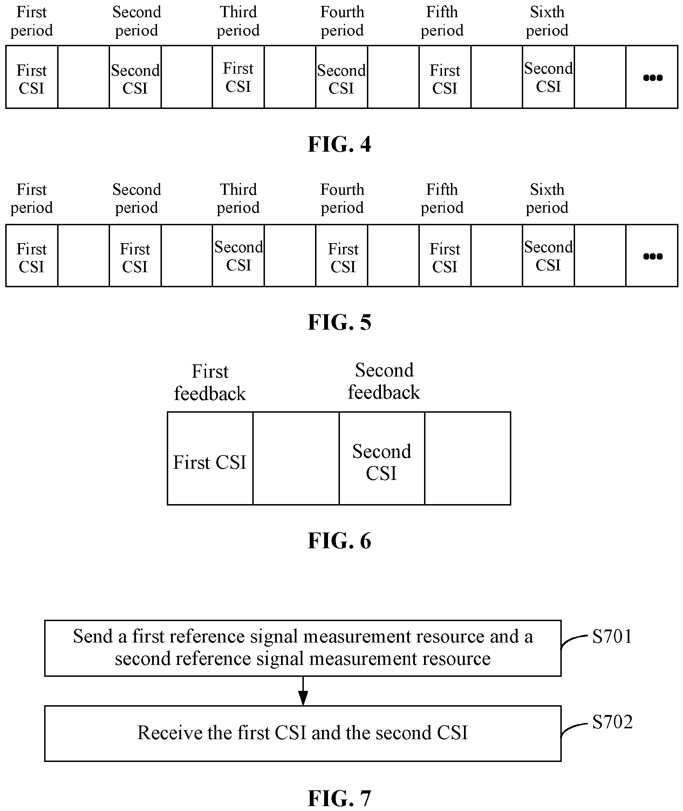

T1 and T2 are positive integers. T1 and T2 may be the same or different. For example, assuming that T1 is equal to T2 and both T1 and T2 are equal to 1, as shown in FIG. 4, the first communication node may alternately transmit the first CSI in one period and transmit the second CSI in one period. That is to say, the first CSI is transmitted in the first period, the second CSI is transmitted in the second period, the first CSI is transmitted again in the third period, the second CSI is transmitted again in the fourth period, the first CSI is transmitted in the fifth period, the second CSI is transmitted in the sixth period, and so on, thereby alternately transmitting the first CSI and the second CSI in the transmission periods of the CSI report.

For example, assuming that T1 is not equal to T2, for example, T1 is equal to 2, and T2 is equal to 1, as shown in FIG. 5, the first communication node may transmit the first CSI in the first period and the second period, transmit the second CSI in the third period, transmit the first CSI again in the fourth period and the fifth period, transmit the second CSI again in the sixth period, and so on, thereby alternately transmitting the first CSI in two periods and transmitting the second CSI in one period.

When the CSI report is the semi-persistent report, transmission of the first CSI in T3 transmission periods and transmission of the second CSI in T4 transmission periods are performed alternately until the CSI report is deactivated, where T3 and T4 are positive integers.

T3 and T4 are positive integers. T3 and T4 may be the same or different. For example, assuming that T3 is equal to T4 and both T3 and T4 are equal to 1, with continued reference to FIG. 4, the first communication node may alternately transmit the first CSI in one period and transmit the second CSI in one period. That is to say, the first CSI is transmitted in the first period, the second CSI is transmitted in the second period, the first CSI is transmitted again in the third period, the second CSI is transmitted again in the fourth period, the first CSI is transmitted in the fifth period, the second CSI is transmitted in the sixth period, and so on, thereby alternately transmitting the first CSI and the second CSI in the transmission periods of the CSI report until the CSI report is deactivated.

For example, assuming that T3 is not equal to T4, for example, T3 is equal to 2, and T4 is equal to 1, with continued reference to FIG. 5, the first communication node may transmit the first CSI in the first period and the second period, transmit the second CSI in the third period, transmit the first CSI again in the fourth period and the fifth period, transmit the second CSI again in the sixth period, and so on, thereby alternately transmitting the first CSI in two periods and transmitting the second CSI in one period until the CSI report is deactivated.

When the CSI report is the aperiodic report, the first CSI or the second CSI is transmitted.

The CSI report includes indication information for indicating that the CSI is the first CSI or the second CSI. That is, the first communication node may autonomously determine to feed back the first CSI or the second CSI and use a field in the CSI report to describe that the fed-back CSI report is the first CSI or the second CSI. For example, as shown in FIG. 6, the first communication node may autonomously determine that the first feedback is the first CSI and indicate through a field in the CSI report that the CSI report fed back this time is the first CSI. For another example, the first communication node may autonomously determine that the second feedback is the second CSI and indicate through a field in the CSI report that the CSI report fed back this time is the second CSI. In an example, when the indication information is equal to the first value, it indicates that the first communication node feeds back the first CSI. In an example, when the indication information is equal to the second value, it indicates that the first communication node feeds back the second CSI. In an example, the first value and the second value may be Boolean values. In an example, the first value and the second value are integer values, for example, the first value is zero and the second value is a non-zero integer.

FIG. 7 is a flowchart of another CSI processing method according to an embodiment of the present application. The method is applied to the second communication node. As shown in FIG. 7, the method may include S701 and S702.

In S701, a first reference signal measurement resource and a second reference signal measurement resource are sent.

The first reference signal measurement resource is used for acquiring the first CSI, and the second reference signal measurement resource is used for acquiring the second CSI.

In an embodiment, one reference signal measurement resource may include at least one channel reference signal measurement resource or at least one channel reference signal measurement resource set. In an embodiment, one reference signal measurement resource may include at least one interference reference signal measurement resource or at least one interference reference signal measurement resource set. In an embodiment, one reference signal measurement resource includes at least one channel reference signal measurement resource and at least one interference reference signal measurement resource. In an embodiment, one reference signal measurement resource includes at least one channel reference signal measurement resource set and at least one interference reference signal measurement resource set.

In an embodiment, the first reference signal measurement resource and the second reference signal measurement resource include at least one same reference signal measurement resource.

For example, the first reference signal measurement resource and the second reference signal measurement resource are the same. In an example, the first reference signal measurement resource includes K1 reference signal measurement resources, and the second reference signal measurement resource includes K2 reference signal measurement resources. Among the K1 reference signal measurement resources and the K2 reference signal measurement resources, K0 reference signal measurement resources are the same. K1, K2, and K0 are positive integers, and K0 is not greater than K1 and K2. In an example, K0 = 1. In an example, K1 = K2 = K0.

In an embodiment, an IRM in the first reference signal measurement resource is the same as an IMR in the second reference signal measurement resource.

In an embodiment, a CMR in the first reference signal measurement resource is the same as a CMR in the second reference signal measurement resource.

In an embodiment, the second communication node may send configuration information related to the first reference signal measurement resource and the second reference signal measurement resource to the first communication node through higher-layer signaling or physical-layer signaling, send the first reference signal measurement resource based on the first reference signal measurement resource configuration information, and send the second reference signal measurement resource based on the second reference signal measurement resource configuration information.

The preceding higher-level signaling includes, but is not limited to, the RRC and the MAC CE. The physical-layer signaling may be transmitted between the first communication node and the second communication node. For example, the physical-layer signaling is transmitted on the PDCCH.

In S702, the first CSI and the second CSI are received.

The first CSI may be the first type of precoding information, and the second CSI may be the second type of precoding information. After receiving the first CSI and the second CSI, the second communication node may adjust the CSI acquisition manner based on the first CSI and the second CSI. In an example, if the first CSI is better than the second CSI or the correlation between the first CSI and the second CSI is less than a preset threshold value, the CSI acquisition manner is adjusted to: acquiring and feeding back the CSI based on a first acquisition manner, for example, acquiring the CSI based on a codebook manner; and the CSI acquisition manner may also be adjusted to: instructing the first communication node to acquire the CSI in a newly determined manner in which the CSI is acquired based on reference channel measurement resources, for example, using an AI network adapted to the new environment. In an example, if the second CSI is better than the first CSI or the correlation between the second CSI and the first CSI is greater than the preset threshold value, it indicates that the current CSI acquisition manner is still adapted to the new environment, so the CSI can be acquired in the original manner, for example, using the original AI network.

In this embodiment, the second communication node may send the first reference signal measurement resource for the first communication node to acquire the first CSI, send the second reference signal measurement resource for the first communication node to acquire the second CSI, and receive the first CSI and the second CSI fed back by the first communication node. Through the first CSI and the second CSI, it can be known whether the AI network currently used is adapted to the current channel environment so that the CSI acquisition manner can be adjusted in time, or more accurate CSI can be acquired from the first CSI and the second CSI, thereby improving the accuracy of the CSI.

In an embodiment, through higher-layer signaling and/or physical-layer signaling, the second communication node configures the first communication node such that the first communication node feeds back the first CSI and the second CSI through the same CSI report. In this manner, the second communication node can receive the first CSI and the second CSI based on the same CSI report. That is to say, the second communication node can acquire the first CSI and the second CSI by receiving one CSI report.

In an embodiment, through higher-layer signaling and/or physical-layer signaling, the second communication node configures the first communication node such that the first communication node feeds back the first CSI through the first CSI report and feeds back the second CSI through the second CSI report. In this manner, the second communication node receives the first CSI through the first CSI report and receives the second CSI through the second CSI report.

The first CSI report and the second CSI report correspond to the same transmission resource, that is, the second communication node receives the first CSI report and the second CSI report through the same time-frequency resource, thereby obtaining the first CSI and the second CSI.

In an embodiment, the priority of the first CSI is higher than the priority of the second CSI. For example, when the first CSI report and the second CSI report correspond to the same transmission resource, if the first CSI and the second CSI cannot be transmitted simultaneously through the transmission resource, the second communication node may receive only the first CSI and ignore the second CSI.

The first CSI report and the second CSI report correspond to different transmission resources. The different transmission resources may be different time-frequency resources corresponding to the same or different slots or may be the same time-frequency resources corresponding to different slots.

In an embodiment, when the first CSI report and the second CSI report correspond to different transmission resources, the second communication node may receive the first CSI and the second CSI based on the type of the CSI report.

The CSI report configured by the second communication node may be a periodic report, a semi-persistent report, or an aperiodic report. When the CSI report is the periodic report, the second communication node alternately receives the first CSI in T1 transmission periods and receives the second CSI in T2 transmission periods. T1 and T2 are positive integers. T1 and T2 may be the same or different. For example, assuming that T1 is equal to T2 and both T1 and T2 are equal to 1, as shown in FIG. 4, the second communication node may alternately receive the first CSI in one period and receive the second CSI in one period.

For example, assuming that T1 is not equal to T2, for example, T1 is equal to 2, and T2 is equal to 1, as shown in FIG. 5, the second communication node may receive the first CSI in the first period and the second period, receive the second CSI in the third period, receive the first CSI again in the fourth period and the fifth period, receive the second CSI again in the sixth period, and so on, thereby alternately receiving the first CSI in two periods and receiving the second CSI in one period.

When the CSI report is the semi-persistent report, the second communication node alternately receives the first CSI in T3 transmission periods and receives the second CSI in T4 transmission periods until the CSI report is deactivated, where T3 and T4 are positive integers.

T3 and T4 are positive integers. T3 and T4 may be the same or different. For example, assuming that T3 is equal to T4 and both T3 and T4 are equal to 1, with continued reference to FIG. 4, the second communication node may alternately receive the first CSI in one period and receive the second CSI in one period until the CSI report is deactivated.

For example, assuming that T3 is not equal to T4, for example, T3 is equal to 2, and T4 is equal to 1, with continued reference to FIG. 5, the second communication node may receive the first CSI in the first period and the second period, receive the second CSI in the third period, receive the first CSI again in the fourth period and the fifth period, receive the second CSI again in the sixth period, and so on, thereby alternately receiving the first CSI in two periods and receiving the second CSI in one period until the CSI report is deactivated.

When the CSI report is the aperiodic report, the second communication node receives the first CSI or the second CSI.

The CSI report includes indication information for indicating that the CSI is the first CSI or the second CSI. For example, with continued reference to FIG. 6, the first communication node may autonomously determine that the first feedback is the first CSI and indicate through a field in the CSI report that the CSI report fed back for the first time is the first CSI so that the second communication node can receive the first CSI. For another example, the first communication node may autonomously determine that the second feedback is the second CSI and indicate through a field in the CSI report that the CSI report fed back for the second time is the second CSI so that the second communication node can receive the second CSI.

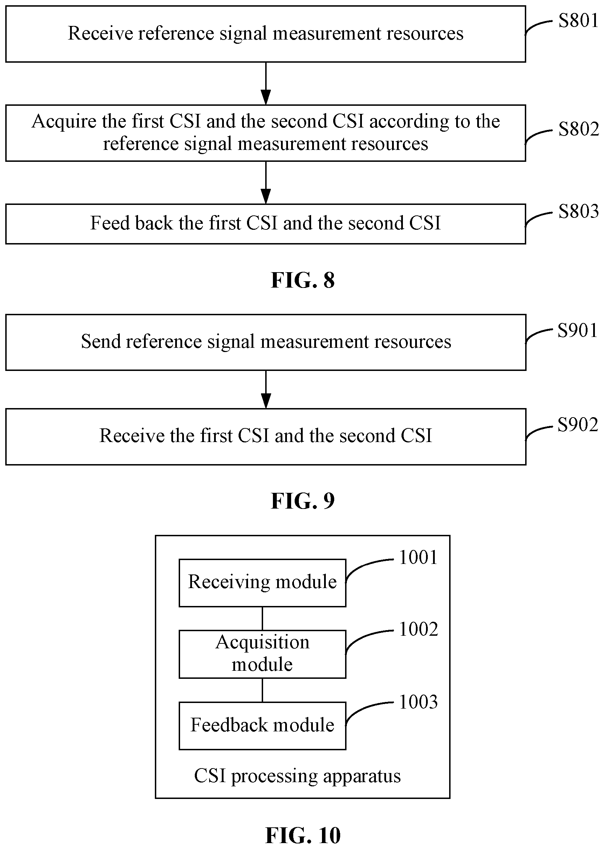

In an embodiment, the first reference signal measurement resource and the second reference signal measurement resource are the same, so the first reference signal measurement resource and the second reference signal measurement resource may be referred to as the reference signal measurement resources. Based on this, the embodiment of the present application further provides another CSI processing method applied to the first communication node. As shown in FIG. 8, the method may include S801, S802, and S803.

In S801, reference signal measurement resources are received.

In S802, the first CSI and the second CSI are acquired according to the reference signal measurement resources.

In S803, the first CSI and the second CSI are fed back.

In an embodiment, that the first CSI and the second CSI are acquired according to the reference signal measurement resources includes the following.

The first CSI is determined according to a first acquisition manner and the reference signal measurement resource, where the first CSI is a first type of precoding information; and the second CSI is determined according to a second acquisition manner and the reference signal measurement resource, where the second CSI is a second type of precoding information.

In an embodiment, that the reference signal measurement resources are received includes the following.

Reference signal measurement resource configuration information is received, and according to the reference signal measurement resource configuration information, the reference signal measurement resources are received.

In an embodiment, an indication manner of the reference signal measurement resource configuration information includes at least one of the following.

Indication is performed by higher-layer signaling or indication is performed by physical-layer signaling.

In an embodiment, the reference signal measurement resource includes an IMR and/or a CMR.

In an embodiment, that the first CSI and the second CSI are fed back includes the following.

The first CSI and the second CSI are fed back through the same CSI report.

In an embodiment, that the first CSI and the second CSI are fed back includes the following.

The first CSI is fed back through a first CSI report and the second CSI is fed back through a second CSI report.

In an embodiment, the first CSI report and the second CSI report correspond to the same transmission resource.

In an embodiment, that the first CSI and the second CSI are fed back includes the following.

The priority of the first CSI is higher than the priority of the second CSI.

In an embodiment, the first CSI report and the second CSI report correspond to different transmission resources.

In an embodiment, that the first CSI and the second CSI are fed back includes the following.

When a CSI report is a periodic report, transmission of the first CSI in T1 transmission periods and transmission of the second CSI in T2 transmission periods are performed alternately, where T1 and T2 are positive integers.

In an embodiment, that the first CSI and the second CSI are fed back includes the following.

When a CSI report is a semi-persistent report, transmission of the first CSI in T3 transmission periods and transmission of the second CSI in T4 transmission periods are performed alternately until the CSI report is deactivated, where T3 and T4 are positive integers.

In an embodiment, that the first CSI and the second CSI are fed back includes the following.

When a CSI report is an aperiodic report, the first CSI or the second CSI is transmitted, where the CSI report includes indication information for indicating that CSI is the first CSI or the second CSI.

In an embodiment, the first reference signal measurement resource and the second reference signal measurement resource are the same, so the first reference signal measurement resource and the second reference signal measurement resource may be referred to as the reference signal measurement resources. Based on this, the embodiment of the present application further provides another CSI processing method applied to the second communication node. As shown in FIG. 9, the method may include S901 and S902.

In S901, reference signal measurement resources are sent.

The reference signal measurement resources are used for acquiring the first CSI and the second CSI.

In S902, the first CSI and the second CSI are received.

In an embodiment, that the reference signal measurement resources are sent includes the following.

Reference signal measurement resource configuration information is sent, and according to the reference signal measurement resource configuration information, the reference signal measurement resources are sent.

In an embodiment, an indication manner of the reference signal measurement resource configuration information includes at least one of the following.

Indication is performed by higher-layer signaling or indication is performed by physical-layer signaling.

In an embodiment, the reference signal measurement resource includes an IMR and/or a CMR.

In an embodiment, that the first CSI and the second CSI are received includes the following.

The first CSI and the second CSI are received through the same CSI report.

In an embodiment, that the first CSI and the second CSI are received includes the following.

The first CSI is received through a first CSI report and the second CSI is received through a second CSI report.

In an embodiment, the first CSI report and the second CSI report correspond to the same transmission resource.

In an embodiment, that the first CSI and the second CSI are received includes the following.

The priority of the first CSI is higher than the priority of the second CSI.

In an embodiment, the first CSI report and the second CSI report correspond to different transmission resources.

In an embodiment, that the first CSI and the second CSI are received includes the following.

When a CSI report is a periodic report, reception of the first CSI in T1 transmission periods and reception of the second CSI in T2 transmission periods are performed alternately, where T1 and T2 are positive integers.

In an embodiment, that the first CSI and the second CSI are received includes the following.

When a CSI report is a semi-persistent report, reception of the first CSI in T3 transmission periods and reception of the second CSI in T4 transmission periods are performed alternately until the CSI report is deactivated, where T3 and T4 are positive integers.

In an embodiment, that the first CSI and the second CSI are received includes the following.

When a CSI report is an aperiodic report, the first CSI or the second CSI is received, where the CSI report includes indication information for indicating that CSI is the first CSI or the second CSI.

FIG. 10 is a diagram illustrating the structure of a CSI processing apparatus according to an embodiment of the present application. The apparatus is integrated into the first communication node. As shown in FIG. 10, the apparatus may include a receiving module 1001, an acquisition module 1002, and a feedback module 1003.

The receiving module 1001 is configured to receive a first reference signal measurement resource and a second reference signal measurement resource. The acquisition module 1002 is configured to acquire first CSI according to the first reference signal measurement resource and acquire second CSI according to the second reference signal measurement resource. The feedback module 1003 is configured to feed back the first CSI and the second CSI.

Based on the preceding embodiment, the acquisition module 1002 is configured to determine the first CSI according to a first acquisition manner and the first reference signal measurement resource, where the first CSI is a first type of precoding information; and the acquisition module 1002 is further configured to determine the second CSI according to a second acquisition manner and the second reference signal measurement resource, where the second CSI is a second type of precoding information.

Based on the preceding embodiment, the receiving module 1001 is configured to receive first reference signal measurement resource configuration information and receive, according to the first reference signal measurement resource configuration information, the first reference signal measurement resource; and the receiving module 1001 is further configured to receive second reference signal measurement resource configuration information and receive, according to the second reference signal measurement resource configuration information, the second reference signal measurement resource.

An indication manner of the first reference signal measurement resource configuration information and the second reference signal measurement resource configuration information includes at least one of the following.

Indication is performed by higher-layer signaling or indication is performed by physical-layer signaling.

The first reference signal measurement resource and the second reference signal measurement resource include at least one same reference signal measurement resource.

The first reference signal measurement resource and the second reference signal measurement resource are the same.

An IMR in the first reference signal measurement resource is the same as an IMR in the second reference signal measurement resource.

A CMR in the first reference signal measurement resource is the same as a CMR in the second reference signal measurement resource.

Based on the preceding embodiment, the feedback module 1003 is configured to feed back the first CSI and the second CSI through the same CSI report.

Based on the preceding embodiment, the feedback module 1003 is configured to feed back the first CSI through a first CSI report and feed back the second CSI through a second CSI report.

The first CSI report and the second CSI report correspond to the same transmission resource.

The priority of the first CSI is higher than the priority of the second CSI.

The first CSI report and the second CSI report correspond to different transmission resources.

Based on the preceding embodiment, the feedback module 1003 is configured to, when a CSI report is a periodic report, alternately transmit the first CSI in T1 transmission periods and transmit the second CSI in T2 transmission periods, where T1 and T2 are positive integers.

Based on the preceding embodiment, the feedback module 1003 is configured to, when a CSI report is a semi-persistent report, alternately transmit the first CSI in T3 transmission periods and transmit the second CSI in T4 transmission periods until the CSI report is deactivated, where T3 and T4 are positive integers.

Based on the preceding embodiment, the feedback module 1003 is configured to, when a CSI report is an aperiodic report, transmit the first CSI or the second CSI, where the CSI report includes indication information for indicating that CSI is the first CSI or the second CSI.

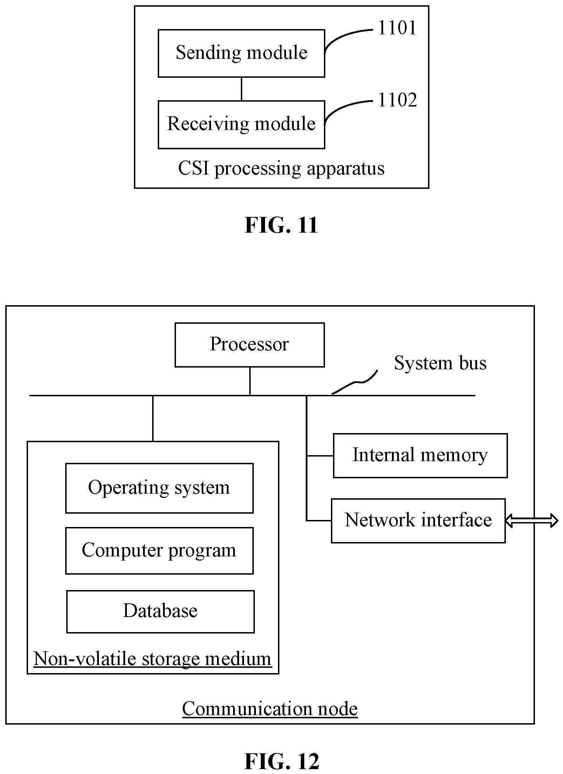

FIG. 11 is a diagram illustrating the structure of another CSI processing apparatus according to an embodiment of the present application. The apparatus is integrated into the second communication node. As shown in FIG. 11, the apparatus may include a sending module 1101 and a receiving module 1102.

The sending module 1101 is configured to send a first reference signal measurement resource and a second reference signal measurement resource, where the first reference signal measurement resource is used for acquiring first CSI, and the second reference signal measurement resource is used for acquiring second CSI. The receiving module 1102 is configured to receive the first CSI and the second CSI.

Based on the preceding embodiment, the sending module 1101 is configured to send first reference signal measurement resource configuration information and send, according to the first reference signal measurement resource configuration information, the first reference signal measurement resource; and the sending module 1101 is further configured to send second reference signal measurement resource configuration information and send, according to the second reference signal measurement resource configuration information, the second reference signal measurement resource.

An indication manner of the first reference signal measurement resource configuration information and the second reference signal measurement resource configuration information includes at least one of the following.

Indication is performed by higher-layer signaling or indication is performed by physical-layer signaling.

The first reference signal measurement resource and the second reference signal measurement resource include at least one same reference signal measurement resource.

The first reference signal measurement resource and the second reference signal measurement resource are the same.

An IMR in the first reference signal measurement resource is the same as an IMR in the second reference signal measurement resource.

A CMR in the first reference signal measurement resource is the same as a CMR in the second reference signal measurement resource.

Based on the preceding embodiment, the receiving module 1102 is configured to receive the first CSI and the second CSI through the same CSI report.

Based on the preceding embodiment, the receiving module 1102 is configured to receive the first CSI through a first CSI report and receive the second CSI through a second CSI report.

The first CSI report and the second CSI report correspond to the same transmission resource.

The priority of the first CSI is higher than the priority of the second CSI.

The first CSI report and the second CSI report correspond to different transmission resources.

Based on the preceding embodiment, the receiving module 1102 is configured to, when a CSI report is a periodic report, alternately receive the first CSI in T1 transmission periods and receive the second CSI in T2 transmission periods, where T1 and T2 are both positive integers.

Based on the preceding embodiment, the receiving module 1102 is configured to, when a CSI report is a semi-persistent report, alternately receive the first CSI in T3 transmission periods and receive the second CSI in T4 transmission periods until the CSI report is deactivated, where T3 and T4 are positive integers.

Based on the preceding embodiment, the receiving module 1102 is configured to, when a CSI report is an aperiodic report, receive the first CSI or the second CSI, where the CSI report includes indication information for indicating that CSI is the first CSI or the second CSI.

In an embodiment, a communication node is provided, and the internal structural diagram may be shown in FIG. 12. The communication node includes a processor, a memory, a network interface, and a database connected via a system bus. The processor of the communication node is used for providing computing and control capabilities. The memory of the communication node includes a non-volatile storage medium and an internal memory. The non-volatile storage medium stores an operating system, a computer program, and a database. The internal memory provides an environment for the operation of the operating system and the computer program in the non-volatile storage medium. The database of the communication node is used for storing data generated during CSI processing. The network interface of the communication node is used for communicating with an external terminal via a network connection. When executed by the processor, the computer program causes the processor to perform a CSI processing method.

The structure shown in FIG. 12 is merely a block diagram of some structures related to the solution of the present application and does not limit the communication node to which the solution of the present application is applied. The communication node may include more or fewer components than the components shown in the figure, may include a combination of some of the components shown in the figure, or may have a different arrangement of the components shown in the figure.

In an embodiment, a first communication node is provided. The first communication node includes a memory and a processor. The memory stores a computer program, and the processor executes the computer program to perform the following.

A first reference signal measurement resource and a second reference signal measurement resource are received; first CSI is acquired according to the first reference signal measurement resource and second CSI is acquired according to the second reference signal measurement resource; and the first CSI and the second CSI are fed back.

In an embodiment, a second communication node is provided. The second communication node includes a memory and a processor. The memory stores a computer program, and the processor executes the computer program to perform the following.

A first reference signal measurement resource and a second reference signal measurement resource are sent, where the first reference signal measurement resource is used for acquiring first CSI, and the second reference signal measurement resource is used for acquiring second CSI; and the first CSI and the second CSI are received.

In an embodiment, a storage medium is provided. The storage medium stores a computer program which, when executed by a processor, causes the processor to perform the following.

A first reference signal measurement resource and a second reference signal measurement resource are received; first CSI is acquired according to the first reference signal measurement resource and second CSI is acquired according to the second reference signal measurement resource; and the first CSI and the second CSI are fed back.

In an embodiment, a storage medium is provided. The storage medium stores a computer program which, when executed by a processor, causes the processor to perform the following.

A first reference signal measurement resource and a second reference signal measurement resource are sent, where the first reference signal measurement resource is used for acquiring first CSI, and the second reference signal measurement resource is used for acquiring second CSI; and the first CSI and the second CSI are received.

A computer storage medium in the embodiment of the present application may be one computer-readable medium or any combination of multiple computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory, or any suitable combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, radio frequency (RF) and the like, or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case relating to the remote computer, the remote computer may be connected to the user computer via any type of network (including a local area network (LAN) or a wide area network (WAN)) or may be connected to an external computer (for example, via the Internet through an Internet service provider).

It is to be understood by those skilled in the art that the term "user equipment" encompasses any suitable type of radio user device such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be of any type suitable for the local technical environment, for example, but is not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A channel state information, CSI, processing method, the method being applied to a first communication node and comprising:
receiving a first reference signal measurement resource and a second reference signal measurement resource;
acquiring first CSI according to the first reference signal measurement resource and acquiring second CSI according to the second reference signal measurement resource; and
feeding back the first CSI and the second CSI.

2. The method of claim 1, comprising at least one of the following:
acquiring the first CSI according to the first reference signal measurement resource comprising:
determining the first CSI according to a first acquisition manner and the first reference signal measurement resource, wherein the first CSI is a first type of precoding information; or
acquiring the second CSI according to the second reference signal measurement resource comprising:
determining the second CSI according to a second acquisition manner and the second reference signal measurement resource, wherein the second CSI is a second type of precoding information.

3. The method of claim 1, wherein receiving the first reference signal measurement resource and the second reference signal measurement resource comprises:
receiving first reference signal measurement resource configuration information and receiving, according to the first reference signal measurement resource configuration information, the first reference signal measurement resource; and
receiving second reference signal measurement resource configuration information and receiving, according to the second reference signal measurement resource configuration information, the second reference signal measurement resource.

4. The method of claim 3, wherein an indication manner of the first reference signal measurement resource configuration information and the second reference signal measurement resource configuration information comprises at least one of the following:
indication by higher-layer signaling or indication by physical-layer signaling.

5. The method of claim 1, wherein the first reference signal measurement resource and the second reference signal measurement resource comprise at least one same reference signal measurement resource.

6. The method of claim 1, wherein the first reference signal measurement resource and the second reference signal measurement resource are the same.

7. The method of claim 1, wherein an interference measurement resource, IMR, in the first reference signal measurement resource is the same as an IMR in the second reference signal measurement resource.

8. The method of claim 1, wherein a channel measurement resource, CMR, in the first reference signal measurement resource is the same as a CMR in the second reference signal measurement resource.

9. The method of claim 1, wherein feeding back the first CSI and the second CSI comprises:
feeding back the first CSI and the second CSI through a same CSI report.

10. The method of claim 1, wherein feeding back the first CSI and the second CSI comprises:
feeding back the first CSI through a first CSI report and feeding back the second CSI through a second CSI report.

11. The method of claim 10, wherein the first CSI report and the second CSI report correspond to a same transmission resource.

12. The method of claim 1, wherein feeding back the first CSI and the second CSI comprises:
a priority of the first CSI is higher than a priority of the second CSI.

13. The method of claim 1, wherein feeding back the first CSI and the second CSI comprises:
in a case where a CSI report is a periodic report, alternately transmitting the first CSI in T1 transmission periods and transmitting the second CSI in T2 transmission periods, wherein T1 and T2 are both positive integers.

14. The method of claim 1, wherein the feeding back the first CSI and the second CSI comprises:
in a case where a CSI report is a semi-persistent report, alternately transmitting the first CSI in T3 transmission periods and transmitting the second CSI in T4 transmission periods until the CSI report is deactivated, wherein T3 and T4 are both positive integers.

15. The method of claim 1, wherein the feeding back the first CSI and the second CSI comprises:
in a case where a CSI report is an aperiodic report, transmitting the first CSI or the second CSI, wherein the CSI report comprises CSI type indication information for indicating that CSI is the first CSI or the second CSI.

16. A channel state information, CSI, processing method, the method being applied to a second communication node and comprising:
sending a first reference signal measurement resource and a second reference signal measurement resource, wherein the first reference signal measurement resource is used for acquiring first CSI, and the second reference signal measurement resource is used for acquiring second CSI; and
receiving the first CSI and the second CSI.

17. A channel state information, CSI, processing apparatus, the apparatus being integrated into a first communication node and comprising:
a receiving module configured to receive a first reference signal measurement resource and a second reference signal measurement resource;
an acquisition module configured to acquire first CSI according to the first reference signal measurement resource and acquire second CSI according to the second reference signal measurement resource; and
a feedback module configured to feed back the first CSI and the second CSI.

18. A channel state information, CSI, processing apparatus, the apparatus being integrated into a second communication node and comprising:
a sending module configured to send a first reference signal measurement resource and a second reference signal measurement resource, wherein the first reference signal measurement resource is used for acquiring first CSI, and the second reference signal measurement resource is used for acquiring second CSI; and
a receiving module configured to receive the first CSI and the second CSI.

19. A communication node, comprising a memory and a processor, wherein the memory is configured to store a computer program, and the processor executes the computer program to perform the channel state information, CSI, processing method of any one of claims 1 to 16.

20. A storage medium storing a computer program which, when executed by a processor, causes the processor to perform the channel state information, CSI, processing method of any one of claims 1 to 16.
